(19) Europäisches Patentamt
European Patent Office
Office européen des brevets

(11) **EP 0 821 039 B1**

(12) **FASCICULE DE BREVET EUROPEEN**

(45) Date de publication et mention
de la délivrance du brevet:
**31.01.2001 Bulletin 2001/05**

(51) Int Cl.7: **C09D 5/03**, C09D 177/00

(21) Numéro de dépôt: **97401611.5**

(22) Date de dépôt: **04.07.1997**

(54) **Compositions auto-adhérentes à résistance au cheminement améliorée utilisables pour le revêtement de substrats métalliques**

Selbsthaftende Zusammensetzungen mit verbesserter Kriechstromfestigkeit zur Beschichtung von Metallsubstraten

Self-adhesive compositions with improved tracking resistance for coating metal substrates

(84) Etats contractants désignés:
**BE DE FR GB IT NL**

(30) Priorité: **23.07.1996 FR 9609237**

(43) Date de publication de la demande:
**28.01.1998 Bulletin 1998/05**

(73) Titulaire: **Atofina**
**92800 Puteaux (FR)**

(72) Inventeurs:
• **Douais, Patrick**
**27410 Le Noyer en Ouche (FR)**
• **Juhue, Didier**
**27300 Bernay (FR)**
• **Julien, Olivier**
**27300 Bernay (FR)**
• **Werth, Michael**
**27300 Bernay (FR)**

(56) Documents cités:
**WO-A-95/01403**      **DD-A- 200 527**

**Description**

DOMAINE TECHNIQUE

L'invention concerne des compositions en poudre auto-adhérentes à résistance au cheminement améliorée à base de résines thermoplastiques et/ou thermodurcissables pour le revêtement de substrats métalliques.

TECHNIQUE ANTERIEURE

Les résines polyamides, polyoléfines, polyesters et/ou polyuréthanes sont couramment utilisées pour le revêtement des substrats métalliques, en raison notamment de leurs bonnes propriétés mécaniques telles que résistance à l'abrasion, aux chocs et leur inertie chimique vis-à-vis de nombreux produits tels que les hydrocarbures, les bases et les acides minéraux.

Mais il est connu que l'adhérence de ces résines sur les métaux est généralement insuffisante par suite par exemple d'une mauvaise mouillabilité. Pour surmonter ce défaut, on enduit le support métallique d'une sous-couche, appelée primaire d'adhérence, destinée à assurer l'accrochage et l'ancrage mécanique de la poudre, par exemple de polyamide. En général, le primaire d'adhérence que l'on utilise est à base de résines thermodurcissables et est appliqué sous forme de poudre, en solution ou en suspension dans des solvants organiques ou aqueux. Il faut donc prévoir des installations supplémentaires pour l'élimination éventuelle des solvants et pour la cuisson du primaire avant l'enduction du substrat ainsi revêtu avec la poudre, par exemple de polyamide. De plus, la cuisson et/ou le séchage du primaire augmentent de façon non négligeable la durée des opérations de revêtement, et donc leur coût.

Etant donné les inconvénients exposés ci-dessus, on préfère de plus en plus s'affranchir de primaire d'adhérence et améliorer l'adhésion directe du revêtement sur le substrat.

Ainsi, la demanderesse a décrit dans le brevet EP 412 888 des mélanges de polyamides et de résines époxy/sulfonamide qui sont utilisables pour revêtir des substrats métalliques sans utiliser de primaire d'adhérence. Ces mélanges de polyamide et de résines époxy/sulfonamide en poudre peuvent s'appliquer au pistolet électrostatique sur le substrat. Il suffit ensuite de passer le substrat ainsi revêtu dans un four pour obtenir la fusion de la poudre et un revêtement uniforme. On peut aussi préchauffer le substrat au-dessus du point de fusion de la poudre et le tremper dans un lit fluidisé de la poudre.

Dans la demande de brevet PCT/FR/95/01740, la demanderesse a proposé des compositions pulvérulentes à base de polyamide, de copolymères d'éthylène et d'acides carboxyliques insaturés ou de leurs esters vinyliques ou non, et éventuellement de copolymère d'éthylène et d'alcool vinylique.

DD 200.527 décrit des revêtements en poudre à base de résines thermoplastiques, dont la résistance à la corrosion est améliorée par incorporation dans la résine thermoplastique (à l'état fondu, en solution ou en suspension) de charges inorganiques (telles que talc, kaolin, $TiO_2$, $SiO_2$, $CaCO_3$) de granulométrie comprise entre 0,001 et 20 µm.

Mais l'adhésion de tels revêtements existants appliqués sans primaire est encore inférieure à celle des revêtements avec primaire, notamment pour ce qui concerne la résistance au cheminement.

EXPOSE DE L'INVENTION

La demanderesse a maintenant trouvé des additifs anti-cheminement pour des compositions en poudre auto-adhérentes, i-e destinées à revêtir des substrats métalliques, sans primaire d'adhérence.

Les additifs anti-cheminement selon l'invention améliorent la résistance au cheminement des compositions auto-adhérentes auxquelles ils sont incorporés de manière à ce que la résistance au cheminement des films des revêtements appliqués sans primaire se rapproche de celle des films de revêtements précédés d'un primaire. Les additifs anti-cheminement sont des carbonates de calcium précipité (CCP), sans enrobant, de surface spécifique (BET) mesurée selon la norme ISO 9277 comprise entre 7 et 12 $m^2$/g et de poids spécifique apparent par écoulement libre mesuré selon la norme ISO 903 compris entre 130 et 180 g/l et de préférence égal à environ 150 g/l.

Les compositions de l'invention sont des mélanges intimes à base des résines et des additifs anti-cheminement décrits ci-dessus.

Les résines ou polymères des compositions de revêtement peuvent être des résines thermoplastiques ou des résines thermodurcissables.

- A titre d'exemple de résines thermoplastiques, on peut citer

  * les polyoléfines telles que PE, PP, leurs copolymères ou alliages
  * le PVC
  * les polyamides aliphatiques, cycloaliphatiques et/ou aromatiques, tels que les PA-11, PA-12, PA-12,12, PA-6, PA-6,6, PA-6,12, les élastomères thermoplastiques à base de polyamide, seuls, en mélange et/ou copolymérisés, de préférence PA-11 et/ou PA-12.

- A titre d'exemple de résines thermodurcissables, on peut citer

  * les résines époxydes, époxy/phénoliques,
  * les hybrides époxy/polyester.

- Les résines acryliques, polyesters et polyuréthannes qui conviennent également peuvent être soit thermoplastiques, soit thermodurcissables.

Par polyesters on entend les résines issus des réactions de condensation entre des acides mono- et polyfonctionnels avec des anhydrides, des polyols ou des esters.

Par résines époxydes, on entend les produits issus de la chimie des diglycidyl éther du bisphénol A , encore appelés DGEBA et les produits issus de la chimie du glycidyl éther des résines Novolacs. Les résines DGEBA utilisées ont des masses moléculaires comprises en général entre 600 et 6000 g/mol.

Les compositions de revêtement selon l'invention peuvent contenir une ou plusieurs des résines énumérées ci-dessus mais également d'autres résines ou polymères améliorant par exemple l'adhésion tels que les résines époxysulfonamides décrites dans EP 412 888, les résines obtenues par polycondensation de composés sulfonamides aromatiques et d'aldéhydes et/ou d'acides dicarboxyliques décrites dans EP 290 342, les copolymères d'éthylène et d'acides carboxyliques insaturés ou de leurs esters vinyliques ou non, et éventuellement de copolymères d'éthylène et d'alcool vinylique décrits dans PCT/FR/95/01740.

Outre les résines et les additifs anti-cheminement indiqués ci-dessus, les compositions de revêtement selon l'invention peuvent de manière préférentielle contenir divers additifs et/ou charges tels que des pigments ou colorants, des agents anti-cratère, réducteur, antioxydant, des charges de renforcement :

- antioxydants comme l'iodure du cuivre combiné avec l'iodure de potassium, des dérivés de phénol et des amines encombrées,
- agents de fluidisation,
- charges renforçantes et nucléantes comme la dolomie, les carbonates de calcium (différents des additifs anticheminement selon l'invention) et/ou de magnésium, le quartz, le nitrure de bore, le kaolin vendu sous la dénomination commerciale "Frantex®", la wollastonite, le dioxyde de titane, les billes de verre, le talc, le mica, vendus sous les noms "Dolomie®" (carbonate double de calcium et magnésium), "Plastorit" (mélange de quartz, mica et chlorite), "Minex®" (feldspath), le noir de carbone,
- stabilisateurs U.V. comme, par exemple, des dérivés de résorcine, des benzotriazoles ou des salicylates,
- agents anti-cratères, ou agents d'étalement,
- pigments comme, par exemple, le dioxyde de titane, le noir de carbone, l'oxyde de cobalt, le titanate de nickel, le bisulfure de molybdène, les paillettes d'aluminium, l'oxyde de fer, l'oxyde de zinc, des pigments organiques comme les dérivés de phtalocyanine et d'anthraquinone.

Il est possible d'incorporer aux compositions de l'invention des additifs choisis notamment parmi ceux décrits ci-dessus et dont les proportions respectives restent dans les limites habituellement rencontrées dans le domaine des compositions en poudre pour le revêtement de substrats notamment métalliques. En général, on incorpore jusqu'à 100 % en poids desdits constituants, c'est-à-dire que ces charges peuvent représenter le même poids que la quantité de résine(s).

Ces additifs peuvent être incorporés par tout moyen dans les compositions de l'invention. Les compositions ci-dessus peuvent être obtenues de façon connue par toute technique de mélangeage des constituants à l'état fondu telle que, par exemple, l'extrusion ou compoundage sur extrudeuse mono- ou double vis, sur co-malaxeur ou par toute technique continue ou discontinue, comme par exemple à l'aide d'un mélangeur interne.

D'une manière générale, la granulométrie des poudres conformes à l'invention peut,être comprise entre 5 μm et 1 mm.

Un premier procédé d'obtention de compositions en poudre selon l'invention consiste à malaxer à l'état fondu résine(s), additif(s) anti-cheminement ainsi qu'éventuel(s) additif(s) et/ou ou charge(s) dans un malaxeur de type approprié. La température de malaxage peut être comprise entre 150 et 300° C et de préférence entre 180 et 230° C.

On peut préparer un mélange maître ou un produit final.

Le produit final est broyé selon les techniques habituelles, à la granulométrie souhaitée pour le revêtement. On peut aussi procéder par atomisation ou précipitation.

Un autre procédé pour préparer ces mélanges de poudre consiste à mélanger à sec tout ou partie (on prépare dans ce cas un mélange maître) des différents composants, mis préalablement sous forme de poudre fine. Ce mélange à sec ou "dry-blend" ne nécessite généralement pas d'appareillage spécial, il peut s'effectuer à température ambiante.

Comme indiqué plus haut, les compositions selon l'invention se présentent sous forme de mélanges intimes; pour des compositions préparées par malaxage à l'état fondu, la quantité d'additif(s) anti-cheminement peut représenter de 0,1 à 50 %, et de préférence de 1 à 40 %, de la masse totale de la composition finale ; pour des compositions préparées par mélange à sec, la quantité d'additif(s) anti-cheminement peut représenter de 0,1 à 5 %, et de préférence de 0,2 à 3 %, de la masse totale de la composition finale.

Selon une technique connue qui ne constitue pas en elle-même un objet de l'invention, le substrat métallique, et notamment en acier ordinaire, en aluminium ou en alliage d'aluminium a pu subir un ou plusieurs des traitements de surface suivants, cette liste n'étant pas limitative : dégraissage grossier, dégraissage alcalin, brossage, grenaillage ou sablage, dégraissage fin, rinçage à chaud, dégraissage phosphatant, phosphatations fer/zinc/tri-cations, chromatation, rinçage à froid, rinçage chromique.

La présente invention concerne aussi l'utilisation des compositions en poudre telles que définies précédemment pour le revêtement de substrats métalliques, ainsi que les substrats ainsi revêtus. Le substrat métallique peut être choisi dans une large gamme de produits. Il peut s'agir de pièces d'acier ordinaire ou galvanisé, de pièces en aluminium ou en alliage d'aluminium. L'épaisseur du substrat métallique peut être quelconque (par exemple de l'ordre du dixième de mm, comme de l'ordre de quelques dizaines de cm).

A titre d'exemples de substrats métalliques aptes à être revêtus avec une composition selon l'invention, on peut citer : acier dégraissé, lisse ou grenaillé, acier dégraissé phosphaté, acier phosphaté fer ou zinc, acier galvanisé Sendzimir, acier électrozingué, acier galvanisé au bain, acier cataphorèse, acier chromaté, acier anodisé, acier sablé corindon, aluminium dégraissé, aluminium lisse ou grenaillé, aluminium chromaté.

La composition selon l'invention est donc appliquée sous forme de poudre sur le substrat métallique. L'application de la composition en poudre peut s'effectuer selon les techniques d'application habituellement mises en oeuvre. Le broyage des poudres peut s'effectuer dans des appareils refroidis cryogéniquement ou à forte absorption d'air (broyeurs à couteaux, à marteaux, à disques). Les particules de poudre obtenues sont sélectées dans des appareils appropriés pour éliminer les tranches granulométriques non souhaitées : par exemple, des grains trop gros et/ou trop fins.

Parmi les techniques d'application en poudre, on peut citer la projection électrostatique, le trempage en lit fluidisé, le lit fluidisé électrostatique (par exemple, celui décrit dans les brevets DD 277 395 et DD 251 510), techniques préférées pour réaliser le revêtement des substrats selon l'invention.

En projection électrostatique, la poudre est introduite dans un pistolet où elle est véhiculée par de l'air comprimé et passe dans une buse portée à un potentiel élevé généralement compris entre une dizaine et une centaine de kilovolts. La tension appliquée peut être de polarité positive ou négative. Le débit de poudre dans le pistolet est généralement compris entre 10 et 200 g/min, et de préférence entre 50 et 120 g/min. Lors de son passage dans la buse, la poudre se charge électrostatiquement. Les particules de poudre véhiculées par l'air comprimé viennent s'appliquer sur la surface métallique à revêtir, ladite surface étant elle-même reliée à la terre, c'est-à-dire à un potentiel électrique nul. Les particules de poudre sont retenues sur cette surface par leur charge électrostatique. Ces forces sont suffisantes pour que l'objet une fois revêtu de poudre puisse être déplacé puis chauffé dans un four à une température qui provoque la fusion de la poudre.

La projection électrostatique des compositions selon l'invention, quelle que soit la polarité d'application, présente un avantage certain car on pourra notamment utiliser les installations industrielles standard existantes qui sont conçues pour la projection électrostatique de revêtements en poudre en une seule polarité, dans ce cas, le substrat métallique subit une préparation de surface.

En général, on peut utiliser une poudre de granulométrie moyenne comprise entre 5 et 100 µm et de préférence entre 20 et 80 µm. L'épaisseur du revêtement est de préférence de l'ordre de $110 \pm 20$ µm.

Dans le cas du procédé de trempage en lit fluidisé, le substrat métallique à revêtir, soigneusement préparé, en subissant par exemple un ou plusieurs traitements de surface énumérés ci-dessus, est chauffé dans un four à une température déterminée suivant notamment la nature dudit substrat, sa forme, son épaisseur et l'épaisseur de revêtement désirée. Le substrat ainsi chauffé est ensuite plongé dans une composition de poudre selon l'invention maintenue en suspension par un gaz en circulation dans une cuve à fond poreux. La poudre fond au contact des surfaces métalliques chaudes et forme ainsi un dépôt dont l'épaisseur est fonction de la température du substrat et de sa durée d'immersion dans la poudre.

En trempage en lit fluidisé, la granulométrie des poudres mises en oeuvre peut être comprise entre 10 et 1000 µm et de préférence, entre 40 et 160 µm. En général, l'épaisseur du revêtement peut être comprise entre 150 et 1000 µm, et de préférence de l'ordre de $400 \pm 50$ µm.

La présente invention concerne aussi un matériau composite comprenant un substrat métallique et un revêtement sous forme de film obtenu par fusion des compositions en poudre de l'invention.

MANIERES DE REALISER L'INVENTION

Exemples

1) Dans les exemples, on utilise les produits suivants :

- PA-11 : désigne un polyamide 11 de masse molaire $\overline{M_n}$ avant application comprise entre 9 000 et 15 000.
- Terpolymère 1/: désigne un copolymère ayant des motifs éthylène, 6 % en poids de motifs acrylate d'éthyle et 3 % en poids de motifs anhydride maléique, d'indice de fluidité mesuré selon selon la norme NFT 51016 égal à 200 g/10 min vendue sous la dénomination commerciale LOTADER® 8200. (C'est une résine destinée à améliorer l'adhésion de la résine polyamide sur le substrat conformément à l'enseignement de la demande de brevet PCT/FR/95/01740.)
- Terpolymère 2/ : désigne un copolymère ayant 44 % molaire de motifs éthylène, des motifs alcool vinylique, d'indice de fluidité mesuré selon selon la norme NFT 51016 égal à 12 g/10 min (mesuré à 210° C sous une charge de 2,16 kg ) greffé par 5 % d'anhydride phtalique (exprimé en % poids du terpolymère 2/) vendu sous la dénomination commerciale SOARNOL® A. (C'est une résine destinée à améliorer l'adhésion de la résine polyamide sur le substrat conformément à l'enseignement de la demande de brevet PCT/FR/95/01740.)
- Charge 1: carbonate de calcium précipité (aciculaire), sans enrobant, de surface spécifique (BET) mesurée selon la norme ISO 9277 égale à 11 $m^2$/g et de poids spécifique apparent par écoulement libre mesuré selon la norme ISO 903 égal à environ 150 g/l vendu sous la dénomination commerciale SOCAL 90A. C'est un additif anti-cheminement au sens de la présente invention.
- Charge 2 : carbonate de calcium précipité (aciculaire), sans enrobant, de surface spécifique (BET) mesurée selon la norme ISO 9277 égale à 10 $m^2$/g et de poids spécifique apparent par écoulement libre mesuré selon la norme ISO 903 égal à 230 g/l vendu sous la dénomination commerciale SOCAL P3.
- Charge 3: carbonate double de calcium et de magnésium non aciculaire contenant 21 % en poids de MgO vendu sous la dénomination commerciale DOLOMIE DRB 4/15
- Charge 4: wollastonite (silicate de calcium) aciculaire de surface spécifique (BET) mesurée selon la norme ASAP 2000 égale à 4 $m^2$/g vendue sous la dénomination commerciale NYAD 1250
- Charge 5 : imbrication de mica, de chlorite (hydrosilicate de magnésium-potassium-aluminium) et de quartz ($SiO_2$ 51,1 % ; $Al_2O_3$ 23,0 % ; MgO 12,5 % ; FeO 3,6 % ; $K_2O$ 2,8 % ; densité 2,75) vendue sous la dénomination commerciale PLASTORIT NAINTSCH
- Charge 6 :silicate double d'alumine, de potasse et de sodium anhydre ($SiO_2$ 61,0 % ; $Al_2O_3$ 23,3 % ; $Fe_2O_3$ trace ; CaO 0,7 % ; MgO trace ; $Na_2O$ 9,8 % ; $K_2O$ 4,6 % ; poids spécifique 2,61 ; diamètre statistique moyen des particules 4,5 $\mu$m) vendu sous la dénomination commerciale MINEX 7.

Dans tout ce qui suit et sauf indication contraire, les proportions des constituants correspondent à des parties en poids.

Les compositions en poudre à base de PA-11 préparées dans les exemples ci-dessous sont ensuite appliquées sur des substrats métalliques soit par projection électrostatique (ES), soit par trempage (T).

La granulométrie des compositions appliquées en ES est principalement comprise entre 20 et 80 $\mu$m et celle des poudres appliquées en trempage pricipalement comprise entre 40 et 1600 $\mu$m. Pour les résines facilitant l'adhésion (terpolymères 1 et 2), la granulométrie est inférieure à 60 $\mu$m.

Après fusion de la composition, l'épaisseur du film de revêtement est de l'ordre de 110 $\pm$ 20 $\mu$m (application ES) et de l'ordre de 400 $\pm$ 50 $\mu$m (application T).

Exemples 1 à 5

Formules et caractéristiques des poudres avant application:

Le tableau 1 ci-dessous résume des compositions de revêtement de couleur grise typiquement mises en oeuvre avec un primaire d'adhérence ; elles sont obtenues par mélange des différents constituants dans un malaxeur à une température comprise entre 190 et 225°C et avec un temps de séjour de l'ordre de 30 secondes. Les produits des exemples 1 à 5 sont ensuite broyés à la granulométrie souhaitée pour application par voie trempage.

Tableau 1

| N° d' exemple | PA-11naturel | Pigments (TiO$_2$, noir de carbone par ex.) | Agents antioxydant et d'étalement | Charge 1 | Charge 2 | Charge 3 |
|---|---|---|---|---|---|---|
| 1 | 1000 | 120 | 9 | | | |
| 2 | 1000 | 120 | 9 | 75 | | |
| 3 | 1000 | 120 | 9 | | 75 | |
| 4 | 1000 | 120 | 9 | | | 75 |
| 5 | 1000 | 120 | 9 | 150 | | |

Application:

Préalablement à l'enduction du revêtement superficiel, tous les substrats (plaques d'acier de 100×100×3mm) subissent un dégraissage suivi d'un grenaillage. Ils sont ensuite préchauffés dans une étuve ventilée pendant 10 min à 330°C, puis on procède au trempage dans le lit fluidisé pendant 4 s. Les substrats ainsi revêtus refroidissent librement à l'air ambiant. L'épaisseur des films est de 400 ± 50 µm.

Evaluation:

Les plaques ainsi revêtues sont ensuite évaluées au brouillard salin, selon la norme NF X 41 002 : les films sont incisés jusqu'au métal suivant la croix de Saint André et le cheminement est mesuré visuellement à partir de cette blessure. Un cheminement total correspond à une valeur de 35mm.
NB Le cheminement mesuré (qui correspond à la distance de décollement du film à partir de la blessure) est la moyenne de la valeur maximale et minimale mesurées sur les huit bords de l'entaille, hors effet "de pointe" où le cheminement peut être nettement supérieur dû à la stagnation et au drainage de l'eau salée.
Le tableau 2 rassemble les résultats obtenus après 1000 h de brouillard salin.

Tableau 2

| N° d'exemple | Cheminement mesuré (mm) |
|---|---|
| 1 (comparatif) | 35* |
| 2 | 5 |
| 3 (comparatif) | 35 |
| 4 (comparatif) | 35 |
| 5 | 10 |

* cheminement total constaté dès 500h de test

Exemples 6 à 9

Formules et caractéristiques des poudres avant application:

Le tableau 3 détaille des compositions réalisées en malaxeur à une température comprise entre 190 et 225°C et avec un temps de séjour de l'ordre de 30. Elles sont à base de PA-11 pur (encore appelé naturel) ou bien de PA-11 blanc (PA-11 naturel contenant en sus, 100 parties de pigments blancs). Après malaxage, les mélanges sont broyés afin d'obtenir une poudre à la granulométrie souhaitée pour application par voie électrostatique, c'est-à-dire 110 ± 20 µm.

Tableau 3

| N° d'exemple | PA-11 naturel | PA-11 blanc | Pigments (noir de carbone, par ex.), agents antioxydant et d'étalement | Charge 1 | Charge 3 | Charge 5 |
|---|---|---|---|---|---|---|
| 6(noir | 800 | | 24 | | 125 | 75 |

Tableau 3   (suite)

| N° d'exemple | PA-11 naturel | PA-11 blanc | Pigments (noir de carbone, par ex.), agents antioxydant et d'étalement | Charge 1 | Charge 3 | Charge 5 |
|---|---|---|---|---|---|---|
| 7(noir) | 800 | | 24 | 125 | | 75 |
| 8(blanc) | | 1000 | 14 | | 40 | 50 |
| 9(blanc) | | 1000 | 14 | 40 | | 50 |

Application :

Les poudres obtenues précédemment sont déposées à température ambiante par projection électrostatique sur une plaque d'acier de mêmes dimensions que celles décrites ci-dessus qui a préalablement subi un dégraissage puis un traitement de surface mécanique (grenaillage). Lors de l'application, la surface métallique est à potentiel nul.
Une fois revêtue, la plaque passe ensuite sans attendre dans un four ventilé maintenu à 220°C où elle séjourne quelques minutes puis est retirée du four et refroidit librement à l'air.
Les conditions d'application par voie électrostatique (ES) sont les suivantes :

| Exemples 6 à 9 | Application électrostatique sur plaque d'acier 100×100×1mm |
|---|---|
| | Substrat grenaillé<br>ES positif +30kV<br>Fusion dans étuve ventilée 4 min à 220°C |

Evaluation :

Le tableau 4 rassemble les résultats au test de résistance au cheminement obtenus après 250 heures de brouillard salin.

Tableau 4

| N° d'exemple | Cheminement (mm) |
|---|---|
| 6 (comparatif) | 15 |
| 7 | 8 |
| 8 (comparatif) | 35 |
| 9 | 19 |

Exemples 10 à 16

Formules et caractéristiques des poudres grises avant application :

Les tableaux 5 et 6 ci-dessous détaillent les compositions de couleur grise réalisées en malaxeur à une température comprise entre 190 et 225°C et avec un temps de séjour de l'ordre de 30 secondes.

Tableau 5

| N° d'exemple | PA-11 naturel | Ter polymères | | Pigments ($TiO_2$, noir de carbone, par ex.) | Agents antioxydant & d'étalement | Autres Charges |
|---|---|---|---|---|---|---|
| | | 2/ | 1/ | | | |
| 10 à 16 | 1000 | 40 | 80 | 120 | 9 | cf tableau 6 |

Tableau 6

| N° d'exemple | Charge 1 | Charge 2 | Charge 3 | Charge 4 | Charge 5 |
|---|---|---|---|---|---|
| 10 | | | | | |
| 11 | 75 | | | | |
| 12 | 150 | | | | |
| 13 | | 150 | | | |
| 14 | | | 150 | | |
| 15 | | | | 150 | |
| 16 | | | | | 150 |

Après malaxage, elles sont broyées à une granulométrie convenable pour application par voie trempage puis appliquées dans les mêmes conditions que celles de l'exemple 1.

L'évaluation se fait par la même méthode que celle décrite dans l'exemple 1. Les résultats sont réunis dans le tableau 7.

Tableau 7

| N° d'exemple | Cheminement mesuré à 1000h (mm) |
|---|---|
| 10 (comparatif) | 35 |
| 11 | 16 |
| 12 | 16 |
| 13 (comparatif) | 35 |
| 14 (comparatif) | 35 |
| 15 (comparatif) | 35 |
| 16 (comparatif) | 35 |

Exemples 17 à 20

Formules et caractéristiques des poudres naturelles et blanches avant application:

Le tableau 8 ci-dessous détaille les compositions réalisées en malaxeur à une température comprise entre 190 et 225°C et avec un temps de séjour de l'ordre de 30 secondes.

Tableau 8

| N° d'exemple/couleur | PA-11 naturel | Ter polymères | | Pigments (TiO$_2$ par ex.) | Charge 1 |
|---|---|---|---|---|---|
| | | 2/ | 1/ | | |
| 16/naturel | 1000 | 40 | 80 | | |
| 17/naturel | 1000 | 40 | 80 | | 150 |
| 18/blanc | 1000 | 40 | 80 | 14 | |
| 19/blanc | 1000 | 40 | 80 | 14 | 150 |

Après malaxage, elles sont broyées à une granulométrie convenable pour application par voie trempage puis appliquées dans les mêmes conditions que celles de l'exemple 1.

L'évaluation se fait par la même méthode que celle décrite dans l'exemple 1 précédent. Les résultats sont réunis dans le tableau 9.

Tableau 9

| N° d'exemple/couleur | Cheminement à 1000 h (mm) |
|---|---|
| 17 / naturel | 35* |
| 18 / naturel | 15 |
| 19 / blanc | 31 |
| 20 / blanc | 21 |

* cheminement total constaté dès 500 h

Exemples 21 à 25

Formules et caractéristiques des poudres avant application:

Les tableaux 10 et 11 ci-dessous détaillent les compositions réalisées en malaxeur à une température comprise entre 190 et 225°C et avec un temps de séjour de l'ordre de 30 secondes.

Tableau 10

| N° d'exemple | PA-11 naturel | Ter polymères | | Pigments (TiO$_2$, noir de carbone, par ex.) | Agents antioxydant & d'étalement | Autres charges |
|---|---|---|---|---|---|---|
| | | 2/ | 1/ | | | |
| 21 à 25 | 1000 | 40 | 80 | 120 | 9 | cf tableau 11 |

Tableau 11

| N° d'exemple | Charge 1 | Charge 3 | Charge 5 | Charge 6 |
|---|---|---|---|---|
| 21 | | 50 | 100 | |
| 22 | 50 | | 100 | |
| 23 | | | 100 | 50 |
| 24 | | 100 | | 50 |
| 25 | 100 | | | 50 |

Après malaxage, elles sont broyées à une granulométrie convenable pour application par voie trempage puis appliquées dans les mêmes conditions que celles de l'exemple 1.

L'évaluation se fait par la même méthode que celle décrite dans l'exemple 1 précédent. Les résultats sont réunis dans le tableau 12.

Tableau 12

| N° d'exemple | Cheminement mesuré à 1000h (mm) |
|---|---|
| 21 (comparatif) | 20 |
| 22 | 10 |
| 23 (comparatif) | 35 |
| 24 (comparatif) | 35 |
| 25 | 20 |

**Revendications**

1. Composition auto-adhérente pour le revêtement de substrats métalliques à base de résines thermoplastiques et/ou thermodurcissables comprenant (i) au moins un carbonate de calcium précipité (CCP), sans enrobant, de surface spécifique (BET) mesurée selon la norme ISO 9277 comprise entre 7 et 12 m$^2$/g et de poids spécifique apparent par écoulement libre mesuré selon la norme ISO 903 compris entre 130 et 180 g/l et de préférence égal à environ 150 g/l et (ii) se présentant sous forme de poudre.

2. Composition selon la revendication 1 à base de polyamide et de préférence à base de PA-11 et/ou de PA-12.

3. Composition selon la revendication 1 ou 2 comprenant aussi des additifs tels que des charges, des pigments, des antioxydants.

4. Procédé de préparation des compositions telles que définies selon l'une quelconque des revendications 1 à 3 par malaxage à l'état fondu des différents constituants puis broyage.

5. Procédé de préparation des compositions telles que définies selon l'une quelconque des revendications 1 à 3 par mélange à sec des différents constituants.

6. Utilisation de carbonate de calcium précipité (CCP), sans enrobant, de surface spécifique (BET) mesurée selon la norme ISO 9277 comprise entre 7 et 12 m$^2$/g et de poids spécifique apparent par écoulement libre mesuré selon la norme ISO 903 compris entre 130 et 180 g/l comme additif anti-cheminement de revêtement de substrat métallique appliqué sous forme de poudre.

7. Matériau composite comprenant un substrat métallique et un revêtement formé d'une composition telle que définie selon l'une des revendications 1 à 3.

8. Matériau composite selon la revendication 7 dans lequel la couche de poudres a été fondue pour faire un revêtement.

**Patentansprüche**

1. Selbsthaftende Zusammensetzung auf der Basis von thermoplastischen und/oder wärmehärtbaren Harzen zur Beschichtung von Metallsubstraten, die (i) mindestens ein gefälltes Calciumcarbonat (CCP) ohne Umhüllung mit einer nach der Norm ISO 9277 bestimmten spezifischen Oberfläche (BET) im Bereich von 7 bis 12 m$^2$/g und einer nach der Norm ISO 903 bestimmten Schüttdichte im Bereich von 130 bis 180 g/l und vorzugsweise etwa 150 g/l enthält und (ii) in Pulverform vorliegt.

2. Zusammensetzung nach Anspruch 1 auf der Basis von Polyamid und vorzugsweise PA-11 und/oder PA-12.

3. Zusammensetzung nach Anspruch 1 oder 2, die ferner Zusatzstoffe, wie Füllstoffe, Pigmente und Antioxidantien, enthält.

4. Verfahren zur Herstellung von Zusammensetzungen nach einem der Ansprüche 1 bis 3 durch Kneten der verschiedenen Bestandteile in geschmolzenem Zustand und anschließendem Zerkleinern.

5. Verfahren zur Herstellung von Zusammensetzungen nach einem der Ansprüche 1 bis 3 durch Mischen der verschiedenen Bestandteile in trockenem Zustand.

6. Verwendung von gefälltem Calciumcarbonat (CCP) ohne Umhüllung mit einer nach der Norm ISO 9277 bestimmten spezifischen Oberfläche (BET) im Bereich von 7 bis 12 m$^2$/g und einer nach der Norm ISO 903 bestimmten Schüttdichte im Bereich von 130 bis 180 g/l als Haftungsverbesserer für Beschichtungen von Metallsubstraten, die in Pulverform aufgebracht werden.

7. Verbundmaterial, das ein Metallsubstrat und eine aus einer Zusammensetzung nach einem der Ansprüche 1 bis 3 gebildeten Beschichtung aufweist.

8. Verbundmaterial nach Anspruch 7, wobei die Pulverschicht zur Bildung eines Überzugs geschmolzen wurde.

**Claims**

1. Self-adhesive composition for the coating of metal substrates, based on thermoplastic and/or heat-curable resins, including (i) at least one precipitated calcium carbonate (PCC), uncoated, with a specific (BET) surface, measured according to ISO standard 9277, of between 7 and 12 $m^2/g$ and with a free-flow apparent specific weight, measured according to ISO standard 903, of between 130 and 180 g/l and preferably equal to approximately 150 g/l and (ii) which is in the form of powder.

2. Composition according to Claim 1, based on polyamide and preferably based on PA-11 and/or PA-12.

3. Composition according to Claim 1 or 2, also including additives such as fillers, pigments, antioxidants.

4. Process for preparing compositions as defined according to any one of Claims 1 to 3 by kneading of the various constituents in the molten state and then grinding.

5. Process for preparing compositions as defined according to any one of Claims 1 to 3 by dry mixing of the various constituents.

6. Use of precipitated calcium carbonate (PCC), uncoated, with a specific (BET) surface, measured according to ISO standard 9277, of between 7 and 12 $m^2/g$ and with a free-flow apparent specific weight, measured according to ISO standard 903, of between 130 and 180 g/l as anticreepage additive for a metal substrate coating applied in powder form.

7. Composite material including a metal substrate and a coating formed of a composition as defined in one of Claims 1 to 3.

8. Composite material according to Claim 7, in which the layer of powders has been melted to make a coating.